# EUROPÄISCHE PATENTANMELDUNG

(11) **EP 1 362 627 A1**
(43) Veröffentlichungstag der Anmeldung: **19.11.2003**
(21) Anmeldenummer: 03007096.5
(22) Anmeldetag: 28.03.2003
(51) Int. Cl.: B01D 39/16, B01D 46/52, B01D 46/12

(54) **Mehrlagiger Filteraufbau und Verwendung eines mehrlagigen Filteraufbaus**

(30) Priorität: 16.05.2002 DE 10221694
(71) Anmelder: BRANOFILTER GMBH, D-90599 Dietenhofen (DE)
(72) Erfinder: Schmierer, Uwe, 91622 Unternbibert-Rügland (DE); Rammig, Jürgen, 91564 Neuendettelsau (DE); Hornfeck, Ulrich, Dr., 95119 Naila (DE); Straub, Roland, 97618 Eichenhausen (DE)
(74) Vertreter: Reimold, Otto, Dipl.-Phys. Dr.

(57) **Zusammenfassung**

Die Erfindung beschreibt einen mehrlagigen Filteraufbau und die Verwendung eines mehrlagigen Filteraufbaus zur Entstaubung von Fluiden, bei dem in Richtung von der Anströmseite zur Abströmseite eine Grobstaubfilterlage , eine Feinstaubfilterlage und eine Stützlage hintereinander angeordnet sind und welcher derart ausgestaltet ist, dass die Faserdurchmesserverteilung innerhalb der Grobstaubfilterlage und der Feinstaubfilterlage einen Gradienten aufweist und, dass die Faserdurchmesser der Grobstaubfilterlage und der Feinstaubfilterlage von der Anström- zur Abströmseite kontinuierlich abnehmen.

Verwendet werden kann dieser mehrlagige Filteraufbau in einer Filterkassette für die Industrieentstaubung sowie in einer stationären oder mobilen Staubreinigungseinrichtung im Haushaltsbereich.

## Beschreibung

Zu Erhöhung der Effizienz von Filtermedien, wie beispielsweise Filtereinheiten in stationären oder mobilen Entstaubungsanlagen oder auch in raumlufttechnischen Anlagen wurden in der Vergangenheit viele Anstrengungen unternommen.

In DE 19919809 A1 wird ein Staubfilterbeutel zur Verwendung in Staubsaugern beschrieben, der aus mindestens einer Faservlieslage und mindestens einer Trägermateriallage besteht und zur effizienten Entfernung von Feinstäuben geeignet ist, ohne die Saugleistung der Staubsauger nennenswert zu verringern. Aufgrund der hierfür eingesetzten relativ dünnen Filterpapier-, Nanofaser- und Meltblownlage ist das Speichervermögen des Materials jedoch gering, da sich die Staubpartikel nur im Oberflächenbereich des Filters ablagern können.

Die EP 0960645 A2 offenbart ebenfalls einen mehrlagigen Staubsaugerfilterbeutel mit sehr guter Staubabscheidewirkung. Die vielfältig ausgestalteten Lagenaufbauten enthalten im allgemeinen eine nass- oder eine trockengelegte Filter-Papierschicht oder einen voluminösen Meltblown-Vliesstoff oder einen spinngeblasenen Vliesstoff oder einen feintitrigen Spinnvliesstoff.

Nachteilig ist dabei der komplexe Aufbau aus unterschiedlichen Materialien, was einen erhöhten Aufwand bei der Herstellung bedingt.

In der EP 0822775 B1 wird ein schlagfester Filterbeutel für Staubsauger dargestellt, der ein Filterlaminat enthält, das aus einer äußeren Trägerschicht, einer faserigen Filtervliesschicht und einer inneren Diffusionsschicht gebildet wird.
Die Filtervliesschicht ist dabei vorzugsweise eine schmelzgeblasene Elektret-Mikrofaser-Vliesstoffbahn, während die Träger- und Diffusionsschicht eine Spinnvlies- oder verfestigte kardierte Stoffbahn sein kann.

Allen gemeinsam ist die Idee, neben einer Stabilisierungsschicht, mehrere Filter-Lagen einzusetzen, welche ein Filtervermögen von unterschiedlichen Abscheidegraden aufweisen, d.h. jede Lage filtert Partikel einer gewissen Größenordnung aus dem Staubgemisch.
Der Nachteil dabei ist, dass an jeder Grenzfläche zwischen den Einzel-Filter-Lagen zwei verschiedene Fraktionen von Staubpartikeln direkt aneinanderliegen, da die einzelnen Filter-Lagen von der Anström- zur Abströmseite hin mit Staub befüllt werden.

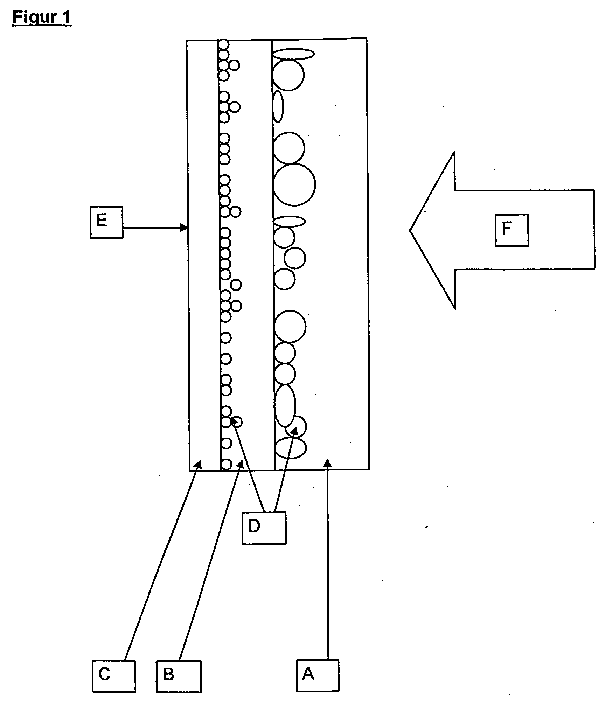

Figur 1 zeigt die Verteilung der Staubpartikel innerhalb eines solchen mehrlagigen Filters nach dem Stand der Technik. Die Bezeichnungen gehen aus der Bezugszeichen-Liste hervor.

Diese charakteristische Verteilung der Staubspeicherung für nach dem Stand der Technik hergestellte Filtermedien aus der für Staubsaugerbeutel gattungsgemässen Art verursacht insbesondere zu Beginn und zum Ende der Nutzzeit hin eine deutliche Zunahme des Differenzdrucks. Daraus resultiert eine Verringerung der Saugleistung des Staubsaugers und somit auch eine Reduzierung der Staubaufnahmeleistung.

Der Erfindung liegt daher die Aufgabe zugrunde, ein mehrlagiges Filtermaterial bereitzustellen, welches die genannten Nachteile des Standes der Technik vermeidet.

Die Aufgabe wird gemäß den Merkmalen des Anspruchs 1 gelöst, indem ein mehrlagiger Filteraufbau (E) zur Entstaubung von Fluiden verwendet wird, bei dem in Richtung von der Anströmseite zur Abströmseite eine Grobstaubfilterlage (A), eine Feinstaubfilterlage (B) und eine Stützlage (C) hintereinander angeordnet sind, welcher derart ausgestaltet ist, dass die Faserdurchmesserverteilung innerhalb der Grobstaubfilterlage (A) und der Feinstaubfilterlage (B) einen Gradienten aufweist und dass die Faserdurchmesser der Grobstaubfilterlage (A) und der Feinstaubfilterlage (B) von der Anström- zur Abströmseite kontinuierlich abnehmen.

Vorteilhafte Ausgestaltungen und Verwendungsmöglichkeiten sind in den Unteransprüchen genannt.

Um mit zunehmender Staubbeladung einen möglichst großen Luftdurchsatz zu erreichen, ist es erforderlich, dass die Staubspeicherung möglichst homogen über die gesamte Dicke des Filteraufbaus geschieht, und dass keine Grenzflächen im Filteraufbau enthalten sind, an welchen eine Anreicherung von Staubpartikeln zu einer Blockade des Gesamtaufbaus führt.

Dies wird durch eine kontinuierliche Abnahme der Porengröße von der Anströmzur Abströmseite über alle das Filtermaterial bildende Lagen erreicht, ohne dass deutlich erkennbare Übergangsbereiche vorliegen.

Die Poren in einem Vliesstoff ergeben sich als Hohlräume zwischen den Fasern, d. h., je geringer der Faserdurchmesser und/oder je höher die Verdichtung des Vlieses gewählt wird, umso kleiner wird die daraus resultierende Porengröße. Damit ein abrupter Übergang infolge unterschiedlicher Porengrößen im Bereich der sich berührenden Oberflächen der Filter-Lagen vermieden wird, ist es notwendig, dass die sich berührenden Oberflächenbereiche annähernd den gleichen Faserdurchmesser aufweisen.

Die fraktionierte Verteilung der abgeschiedenen Staubpartikel über den gesamten Querschnitt des Filtermediums wird ermöglicht, indem das Filtermedium von der Anström- zur Abströmseite hin immer kleiner werdende Poren in jeder Filterlage besitzt, so dass große Staubpartikel von entsprechend großen Poren und kleine Staubpartikel von kleinen Poren aufgenommen werden.

Dieser gewünschte progressive Filteraufbau wird durch Ausbildung eines Gradienten des Faserdurchmessers, sowie durch Auswahl spezieller Vliesbildungs- und Vliesverfestigungsverfahren und durch Kombination geeigneter Vliesstoffe erzielt.

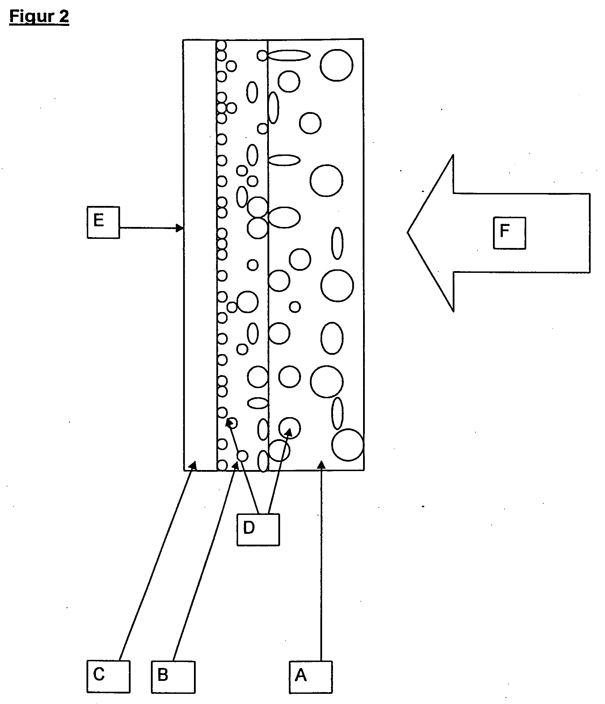

Figur 2 zeigt die charakteristische Verteilung der Staubpartikel (D) innerhalb der Grobstaubfilterlage (A) und der Feinstaubfilterlage (B) am erfindungsgemässen mehrlagigen Filteraufbau (E) im Querschnitt.

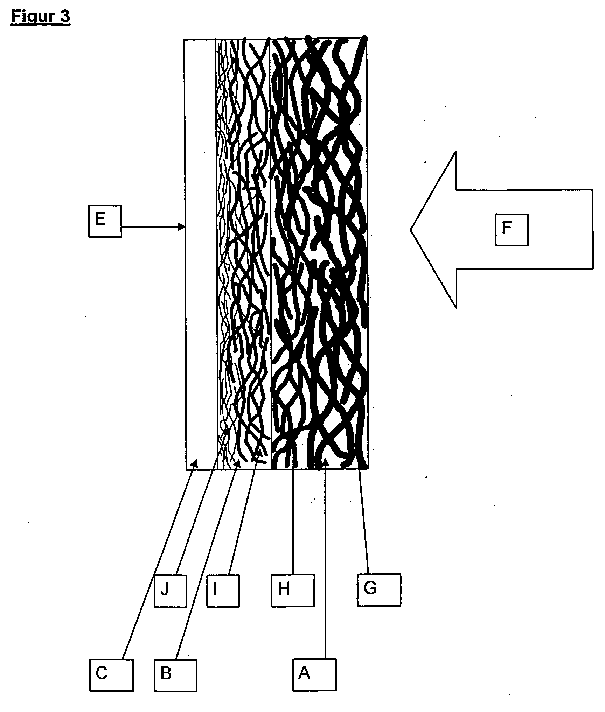

In Figur 3 wird der erfindungsgemässe progressive Filteraufbau (E) der Grobstaubfilterlage (A) und der Feinstaubfilterlage (B) im Querschnitt dargestellt.

Für den erfindungsgemässen mehrlagigen Filteraufbau (E) wird als Grobfilterlage (A) ein Filtermedium eingesetzt, das beispielsweise aus einem kardierten, einseitig vernadelten und thermisch verfestigten Vliesstoff besteht, der sich aus wirr angeordneten gekräuselten Stapelfasern zusammensetzt, welche eine erste synthetische Stapelfaser mit einer ersten Faserfeinheit, und mindestens eine zweite synthetische Stapelfaser mit einer zweiten Faserfeinheit umfassen.

Der gewünschte Gradient wird dadurch erzielt, dass die Anordnung von unterschiedlich feinen Stapelfasern so gewählt wird, dass die gröberen Stapelfasern (G) an der der Anströmrichung (F) zugewandten Seite liegen, während sich die feineren Stapelfasern (H) an der der Anströmrichtung (F) abgewandten Seite befinden. Eine zusätzliche mechanische Verfestigung in Form einer Vernadelung, die nur von der Seite her erfolgt, an der sich die feinen Stapelfasern befinden, führt zu einer weiteren Verdichtung in diesem Bereich und somit zu einer verstärkten Ausprägung des angestrebten Gradienten.

Die Feinstaubfilterlage (B) ist beispielsweise eine Mikrofasermatte aus thermoplastischen Polymeren, die nach dem Meltblown-Verfahren hergestellt wird und ebenfalls einen Gradienten besitzt, d. h. der mittlere Faserdurchmesser der Mikrofasern verringert sich über den Querschnitt von der Anströmseite in Richtung Abströmseite. Innerhalb der Feinstaubfilterlage (B) befinden sich Faserbündelungen (I) gleichfalls an der der Anströmrichtung zugewandten Seite und die feineren Mikrofasern (J) an der der Abströmrichtung abgewandten Seite.

Als Stützlage (C) für den erfindungsgemässen mehrlagigen Filteraufbau (E) wird ein Spinnvliesstoff aus thermoplastischen Synthesefasern mit einer homogenen Faserfeinheit verwendet. Dieser dient jedoch lediglich der mechanischen Stabilisierung und hat keinerlei Einfluss auf die filtertechnischen Eigenschaften des Gesamtaufbaus.

Die Verbindung der einzelnen Lagen geschieht dabei bauart-bedingt vornehmlich an den Rändern des vorliegenden Filteraufbaus entweder mittels eines Klebstoffes oder durch Ultra-Schall oder durch hydrodynamische Laminierung oder durch Heissverpressen oder durch Vernähen der Kantenbereiche des Staubfilterbeutels.

Anhand des nachstehenden Ausführungsbeispiels wird die Erfindung im Detail erläutert.

Materialaufbau des erfindungsgemässen mehrlagigen Filteraufbaus (E):
- Grobstaubfilterlage (A):: Kardiertes, einseitig vernadeltes, thermisch verfestigtes Stapelfaservlies, Flächengewicht: 60 g/m²
- Feinstaubfilterlage (B):: Mikrofaser-Vliesstoff, hergestellt nach dem Meltblown-Verfahren, Flächengewicht: 45 g/m²
- Stützlage (C):: Spinnvliestoff, hergestellt nach dem Spunbond-Verfahren,
Flächengewicht: 30 g/m²

Die Herstellung der einzelnen, für den erfindungsgemäßen Filteraufbau notwendigen Lagen geschieht dabei wie folgt.

Der die Grobstaubfilterlage (A) bildende kardierte Stapelfaservliesstoff wird nach bekannten Krempelverfahren, auch unter Zuhilfenahme von Kreuzlegern hergestellt.
Dabei ist nachgeschaltet eine Nadelmaschine, mit der eine einseitige Vernadelung möglich ist. Dabei wird der Vliesstoff auf der Abströmseite nicht vollständig durchnadelt, es ergibt sich lediglich eine einseitige Verdichtung des Vliesstoffes. Die Porengröße auf der genadelten Seite ist dabei geringer als die auf der nichtgenadelten Seite. Es wird somit ein Gradient der Porengrößen gebildet.

Auch die Wahl der zum Einsatz kommenden Fasern, speziell deren Faserdurchmesser, hat entscheidenden Einfluss auf die Ausbildung des Gradienten und somit auf den erfindungsgemäßen Filteraufbau.

Es hat sich als günstig erwiesen, den Stapelfaservliesstoff polymereinheitlich aufzubauen. Dabei werden Fasern aus Polyethylenterephthalat bevorzugt, es ist jedoch möglich, auch andere thermoplastische Fasermaterialien zum Einsatz zu bringen.

Als günstig für den Einsatzzweck als Staubfilterbeutel hat sich eine Mischung des die Grobstaubfilterlage (A) bildenden Stapelfaservliesstoffes aus

| | |
|---|---|
| 40 Gew% | PET-Faser mit einem mittleren Faserdurchmesser von 9,1 µm (entsprechend 0,9 dtex) und einer Stapellänge 40 mm |
| 40 Gew% | bikomponente PET-Schmelzklebe-Faser mit einem mittleren Faserdurchmesser von 14,2 µm (entsprechend 2,2 dtex) und einer Stapellänge 40 mm |
| 10 Gew% | PET-Faser mit einem mittleren Faserdurchmesser von 17,4 µm (entsprechend 3,3 dtex) und einer Stapellänge 60 mm |
| 10 Gew% | PET-Faser mit einem mittleren Faserdurchmesser von 24,9 µm (entsprechend 6,7 dtex) und einer Stapellänge 60 mm |

gezeigt.

Diese Mischung wird homogen durchmischt, daraus ein kardierter Faserflor mit ca. 60 g/qm Flächengewicht hergestellt. Anschließend wird der Faserflor einer einseitigen Vernadelung sowie thermischen Verfestigung mittels Durchluft zugeführt. Der daraus erhaltene Vliesstoff weist eine einseitige Verdichtung auf, sodaß über die Dicke des Vliesstoffes eine Abnahme der Porengrösse von der nicht vernadelten Anströmseite hin zur vernadelten Abströmseite erreicht wird.

Alternativ dazu kann, bei Herstellung der Grobstaubfilterlage (A) mit zwei Krempeln, auf den einzelnen Krempeln mit unterschiedlichen Fasermischungen gearbeitet werden, sodaß der Porengrößen-Gradient bereits durch die Fasermischung erreicht wird und gegebenenfalls durch eine nachgeschaltete, einseitige Vernadelung noch verstärkt wird.

Die Mischung kann dann für die Anströmseite aus

| | |
|---|---|
| 30 Gew% | PET-Faser mit einem mittleren Faserdurchmesser von 24,9 µm |
| 30 Gew% | PET-Faser mit einem mittleren Faserdurchmesser von 17,4 µm |
| 40 Gew% | bikomponente PET-Schmelzklebefaser mit einem mittleren Faserdurchmesser von 14,2 µm |

bestehen und auf der Abströmseite aus

| | |
|---|---|
| 30 Gew% | PET-Faser mit einem mittleren Faserdurchmesser von 9,1 µm |
| 30 Gew% | PET-Faser mit einem mittleren Faserdurchmesser von 12,5 µm |
| 40 Gew% | bikomponente PET-Schmelzklebefaser mit einem mittleren Faserdurchmesser von 14,2 µm. |

Auch dieser Vliesstoff wird in einem Flächengewicht von 100 g/qm hergestellt, einseitig auf der Abströmseite genadelt und abschließend thermisch verfestigt.

Die Dicke derartiger Vliesstoffe, welche als Grobstaubfilterlage (A) im erfindungsgemäßen Filteraufbau (E) eingesetzt werden liegt bei 1,5 bis 6 mm, vorzugsweise bei 2,5 bis 3,5 mm. Die Ermittlung der Dicke geschieht dabei nach EDANA 30.5-99, Verfahren B. Die Luftdurchlässigkeit liegt bei 1000 bis 4000, vorzugsweise bei 2000 bis 3000 I/qm x sec bei einem Differenzdruck von 200 Pa.

Die für die Feinstaubfilterlage (B) zum Einsatz kommenden Feinfaservliesstoffe, welche beispielsweise nach dem Melt-Blown-Verfahren gebildet werden, weisen auch einen Gradienten der Faserdurchmesser auf.

Dies wird durch eine Wahl des Herstellverfahrens erreicht, wie beispielsweise in DE 199 56 368 A1 beschrieben. Die dort genannten Verfahrensparameter begünstigen die Ausbildung von Faserbündelungen, d.h. Faserkonglomerate mit großem Durchmesser. Diese werden der Einfachheit halber hier auch als Faser bezeichnet.

Andererseits wird durch das in DE 199 56 368 A1 beschriebene Verfahren die selektierte Ablage der gebildeten Fasern dergestalt erreicht, dass Fasern mit geringem Faserdurchmesser bevorzugt an der späteren Abströmseite des Vliesstoffes und Fasern mit größerem Faserdurchmesser bevorzugt an der späteren Anströmseite abgelegt werden.

Die die Feinstaubfilterlage (B) bildenden schmelzgeblasenen Fasern haben dann beispielsweise an der Anströmseite, welche später die Abströmseite der Grobstaubfilterlage (A) berührt, einen mittleren Faserdurchmesser im Bereich von 8 µm bis 15µm, bevorzugt von 10µm bis 12µm. Die Abströmseite wird bevorzugt aus Fasern gebildet, welche einen Faserdurchmesser von 4µm und geringer aufweisen.

Die Flächengewichte der Feinstaubfilterlage (B) liegen zwischen 20 und 190 g/qm , bevorzugt zwischen 40 und 100 g/qm, die Luftdurchlässigkeit zwischen 100 und 1500 I/qm x sec, bevorzugt zwischen 300 und 700 I/qm x sec.

Entscheidend für den späteren Einsatz ist nun ein nahezu gleicher Durchmesser der Fasern an den Oberflächen, an welchen sich Grobstaubfilterlage (A) und Feinstaubfilterlage (B) berühren. Im vorerwähnten Beispiel lag der mittlere Faserdurchmesser an der Abströmseite der Grobstaubfilterlage (A) bei 12,2 µm. Die Anströmseite der Feinstaubfilterlage (B) wurde aus Fasern gebildet, deren mittlerer Faserdurchmesser bei 10,8 µm lag.

Erfindungsgemäß sollte der Unterschied der mittleren Faserdurchmesser an den sich berührenden Lagen 20 % nicht überschreiten.

Die Stützlage (C ) kann beispielsweise durch ein handelsübliches Spinnvlies gebildet werden. Dieses sollte so gewählt werden, dass es keinerlei Einfluss auf die filtertechnischen Eigenschaften des Gesamtaufbaus nimmt.

Für die Endanwendung als zum Beispiel Staubfilterbeutel werden die Lagen nun lose aufeinander geschichtet, wobei der erfindungsgemäße Aufbau durch das Aufeinanderlegen der Abströmseite der Grobstaubfilterlage (A) auf die Anströmseite der Feinstaubfilterlage (B) erreicht wird. Die Fixierung geschieht in den Randbereichen des Staubfilterbeutels zum Beispiel durch Ultraschallverschweißung, Verklebung, thermischen Verschweißen oder hydrodynamischer Verbindung.

Die in der Feinstaubfilterlage (B) enthaltenen Faserbündelungen begünstigen darüberhinaus das Schweißverhalten des Gesamtverbundes bei der Herstellung von Staubfilterbeuteln. Aufgrund der Tatsache, dass im Bereich dieser Bündelungen eine größere Fasermasse vorhanden ist, ist das Schmelzverhalten dem der anderen Lagen angepasst. Das bei Spinnvlies/Meltblown/Carded-Verbunden im Bereich der Schmelznähte häufig zu beobachtende Wegschmelzen des Meltblown-Vlieses wird dadurch vermieden.

Bei der Verwendung des Materials mit exponierten Flächen, welche größer als ein Viertel Quadratmeter sind, kann auch eine Verbindung der Einzellagen zur Erhöhung der mechanischen Stabilität erforderlich sein. Diese kann dann beispielsweise über eine thermische oder ultraschallbasierende Punktverschweißung geschehen, wobei darauf zu achten ist, das nur wenige Verbindungspunkte eingebracht werden. Günstig ist dabei beispielsweise eine Anzahl von einem Punkt pro 625 Quadratzentimeter Filterfläche. Denkbar ist aber auch eine adhäsive Verbindung der Einzellagen miteinander.

Der so erzielte, erfindungsgemäße mehrlagige Filteraufbau (E) kann nun in allen, zur Entstaubung von Fluiden denkbaren Bereichen eingesetzt werden. Nachfolgend sind einige Beispiele genannt.

Im Bereich mobiler Entstaubungseinrichtungen, insbesondere Staubsaugern zeichnet sich der erfindungsgemäße Aufbau durch eine Vergleichmäßigung der Staubabscheideleistung über die Zeit gegenüber herkömmlichen, dem Stand der Technik entsprechenden, Aufbauten aus.

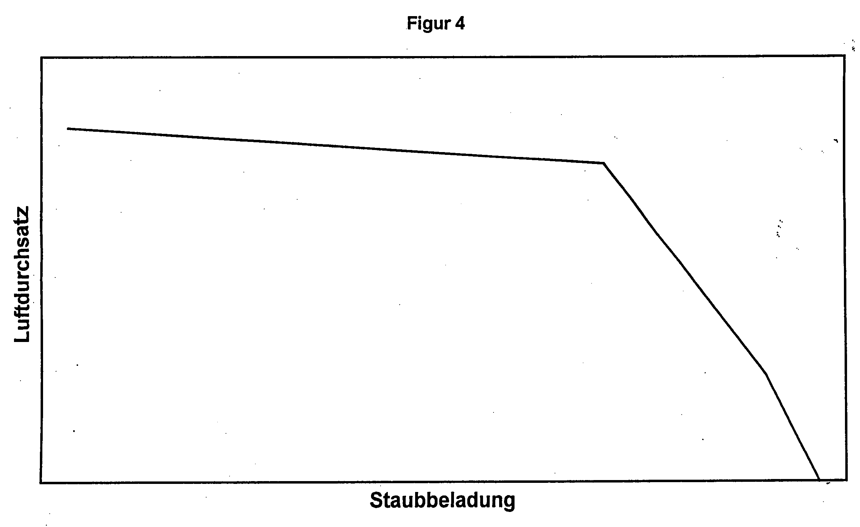

Wie in Figur 4, der Beziehung des Luftdurchsatzes (gemessen in I/qm x sec) durch den Filteraufbau zur Staubbeladung (gemessen in g), dargestellt, setzt der Einbruch des Luftdurchsatzes, welcher gleichbedeutend mit einer Verringerung der Saugleistung ist, erst kurz vor Ende der maximal möglichen Staubbeladung ein. Dies ist ein wesentlicher Vorteil im Vergleich zu den bekannten Materialien, aus welchen Staubfilterbeutel nach dem Stand der Technik aufgebaut sind. Hier erfolgt bereits ab dem Moment der ersten Nutzung ein deutlicher Abfall des Luftdurchsatzes und somit der Saugleistung. Die bisherigen Sauger mussten also mit höherer Leistung konstruiert werden, als eigentlich für den Anwendungsfall notwendig. Ein Staubsauger, welcher mit einem entsprechenden Beutel aus dem erfindungsgemäßen Material bestückt ist, hat über den gesamten Lebenszyklus des Beutel nahezu gleichbleibende Saugleistungen an der Saugdüse.

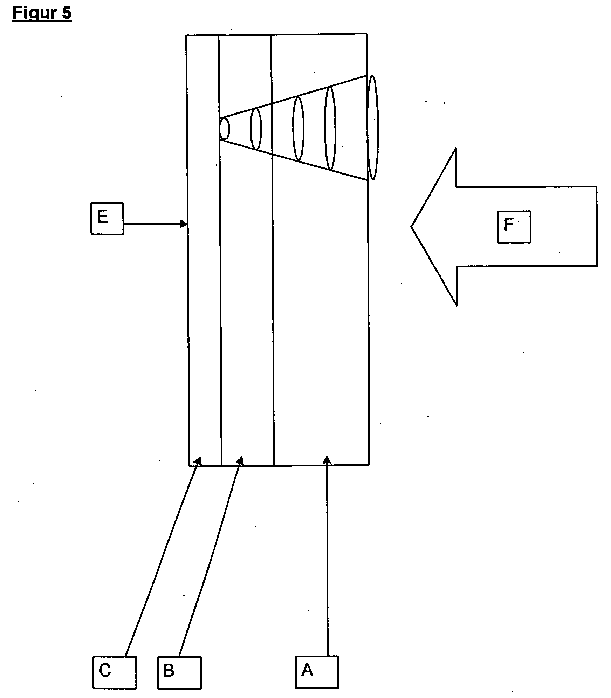

Auch bei der Verwendung des erfindungsgemäßen Aufbaus im Bereich stationärer Filtrations- und Entstaubungseinrichtungen, beispielsweise in industriell eingesetzten raumlufttechnischen Anlagen, zeichnet sich der erfindungsgemäße Filteraufbau durch Verlängerungen der Standzeiten der Filter aus. Auch hier ist das Prinzip der gleitenden Abscheidung, wie in Figur 5 gezeigt, entscheidend für die Gleichmäßigkeit der Abscheideleistung über die Nutzungsdauer.

Der erfindungsgemäße Filteraufbau ist ferner besonders geeignet für Staubfilterbeutel, Taschenfilterbeutel, plissierte Filter, flächige Abluftfilter, die insbesondere vor und/oder nach der Turbine eines Staubsaugers angeordnet werden, sowie für Luftfilter für Kraftfahrzeuge.

## Patentansprüche

1. Mehrlagiger Filteraufbau (E) zur Entstaubung von Fluiden, bei dem in Richtung von der Anströmseite zur Abströmseite eine Grobstaubfilterlage (A), eine Feinstaubfilterlage (B) und eine Stützlage (C) hintereinander angeordnet sind,
**dadurch gekennzeichnet,**
- **dass** die Faserdurchmesserverteilung innerhalb der Grobstaubfilterlage (A) und der Feinstaubfilterlage (B) einen Gradienten aufweist und
- **dass** die Faserdurchmesser der Grobstaubfilterlage (A) und der Feinstaubfilterlage (B) von der Anström- zur Abströmseite kontinuierlich abnehmen.

2. Mehrlagiger Filteraufbau (E) nach Anspruch 1,
**dadurch gekennzeichnet,**
- **dass** sich die Faserdurchmesser der Grobstaubfilterlage (A) und der Feinstaubfilterlage (B) im Bereich der sich berührenden Oberflächen weniger als 20% unterscheiden.

3. Mehrlagiger Filteraufbau (E) nach Anspruch 1 oder 2,
**dadurch gekennzeichnet,**
- **dass** die Faserdurchmesser der Feinstaubfilterlage (B) im Bereich der sich mit der Grobstaubfilterlage (A) berührenden Oberfläche gleich oder bis zu 20% geringer sind als die Faserdurchmesser der Grobstaubfilterlage (A) in diesem Bereich.

4. Mehrlagiger Filteraufbau (E) nach einem der Ansprüche 1 bis 3,
**dadurch gekennzeichnet,**
**dass** die Grobstaubfilterlage (A) aus einem einen Faserdurchmessergradienten aufweisenden Stapelfaservliesstoff gebildet wird.

5. Mehrlagiger Filteraufbau (E) nach einem der Ansprüche 1 bis 3,
**dadurch gekennzeichnet,**
**dass** die Grobstaubfilterlage (A) aus einem kardierten, einseitig vernadelten und thermisch verfestigten Vliesstoff besteht, der sich aus wirr angeordneten gekräuselten Stapelfasern zusammensetzt, welche eine erste synthetische Stapelfaser mit einer ersten Faserfeinheit, und mindestens eine zweite synthetische Stapelfaser mit einer zweiten Faserfeinheit umfassen.

6. Mehrlagiger Filteraufbau (E) nach einem der Ansprüche 1-3,
**dadurch gekennzeichnet,**
**dass** die Feinstaubfilterlage (B) aus einem, einen Faserdurchmessergradienten aufweisenden Meltblown-Vliesstoff gebildet wird.

7. Mehrlagiger Filteraufbau (E) nach einem der Ansprüche 1-6,
**dadurch gekennzeichnet,**
**dass** das Flächengewicht der Grobstaubfilterlage (A) im Bereich von 40 bis 500 g/qm liegt.

8. Mehrlagiger Filteraufbau (E) nach einem der Ansprüche 1-7,
**dadurch gekennzeichnet,**
**dass** das Flächengewicht der Feinstaubfilterlage (B) im Bereich von 20 bis 190 g/qm liegt.

9. Mehrlagiger Filteraufbau (E) nach einem der Ansprüche 1-8,
**dadurch gekennzeichnet,**
**dass** das Flächengewicht der Stützlage im Bereich von 10 bis 50 g/qm liegt.

10. Mehrlagiger Filteraufbau (E) nach einem der Ansprüche 1-9,
**dadurch gekennzeichnet,**
**dass** die Dicke der Grobstaubfilterlage (A) zwischen 1,5 und 6 mm liegt.

11. Mehrlagiger Filteraufbau (E) nach einem der Ansprüche 1-10,
**dadurch gekennzeichnet,**
**dass** die Luftdurchlässigkeit der Grobstaubfilterlage (A) zwischen 1000 und 4000 I/qm x sec liegt.

12. Mehrlagiger Filteraufbau (E) nach einem der Ansprüche 1-11,
**dadurch gekennzeichnet**,
die Grobstaubfilterlage (A), die Feinstaubfilterlage (B) und die Stützlage (C) aus thermoplastischen Polymeren gebildet werden.

13. Mehrlagiger Filteraufbau (E) nach einem der Ansprüche 1-12,
**dadurch gekennzeichnet,**
**dass** die Stapelfasern der Grobstaubfilterlage (A) einen mittleren Faserdurchmesser von 8,0 bis 40,0 µm haben.

14. Mehrlagiger Filteraufbau (E) nach einem der Ansprüche 1-13,
**dadurch gekennzeichnet,**
**dass** die Fasern der Grobstaubfilterlage (A) und/oder der Feinstaubfilterlage (B) mit einem die elektrostatische Aufladung begünstigtenden Additiv versehen sind.

15. Mehrlagiger Filteraufbau (E) nach einem der Ansprüche 1-14,
**dadurch gekennzeichnet,**
**dass** die Fasern der Grobstaubfilterlage (A) und/oder der Feinstaubfilterlage (B) mit einem antimikrobiell wirksamen Additiv versehen sind.

16. Verwendung eines mehrlagigen Filteraufbaus (E) nach einem der Ansprüche 1 bis 15 in einer stationären oder mobilen Staubreinigungseinrichtung.

17. Staubfilterbeutel,
**dadurch gekennzeichnet,**
**dass** seine Wandung aus einem mehrlagigen Filtermaterial nach einem der Ansprüche 1 bis 15 besteht.

18. Taschenfilterbeutel,
**dadurch gekennzeichnet,**
**dass** seine Wandung aus einem mehrlagigen Filtermaterial nach einem der Ansprüche 1 bis 15 besteht.

19. Plissierter Filter,
**dadurch gekennzeichnet,**
**dass** seine Wandung aus einem mehrlagigen Filtermaterial nach einem der Ansprüche 1 bis 15 besteht.

20. Flächiger Abluftfilter, der insbesondere vor und/oder nach der Turbine eines Staubsaugers angeordnet wird,
**dadurch gekennzeichnet,**
**dass** er aus einem mehrlagigen Filtermaterial nach einem der Ansprüche 1 bis 15 besteht.

21. Luftfilter für Kraftfahrzeuge,
**dadurch gekennzeichnet,**
**dass** er aus einem mehrlagigen Filtermaterial nach einem der Ansprüche 1 bis 15 besteht.
